# EUROPÄISCHE PATENTANMELDUNG

(11) **EP 3 023 216 A1**
(43) Veröffentlichungstag der Anmeldung: **25.05.2016**
(21) Anmeldenummer: 15192811.6
(22) Anmeldetag: 03.11.2015
(51) Int. Cl.: B29C 44/34, B29C 44/32, B32B 5/18, B29K 77/00

(54) **VERBUNDBAUTEIL UND VERFAHREN ZU DESSEN HERSTELLUNG**

(30) Priorität: 05.11.2014 DE 102014016329
(71) Anmelder: AUDI AG, 85045 Ingolstadt (DE); Isosport Verbundbauteile Gesellschaft m.b.H., 7000 Eisenstadt (AT)
(72) Erfinder: Jäschke, Anja, 92339 Beilngries (DE); Gornik, Christian, 2491 Neufeld (AT); Pfeifer, Gerald, 7083 Purbach am Neusiedlersee (AT)

(57) **Zusammenfassung**

Die Erfindung betrifft ein Verbundbauteil bestehend aus einer geschäumten, polymeren Mittelschicht und zwei außenliegenden Deckschichten, wobei Polymer Polyamid in der Mittelschicht verwendet wird. Ferner umfasst die Erfindung ein Verfahren zur Herstellung eines Verbundbauteils aufweisend eine geschäumte, polymere Mittelschicht und Außenlagen aus Deckschichten, wobei die Polymerschmelze in einem Extruder erzeugt wird, mit den Deckschichten zusammengeführt wird und in einer Doppelbandpresse abgekühlt und dickenkalibriert wird.

## Beschreibung

Die Erfindung betrifft ein Verbundbauteil nach dem Oberbegriff des Patentanspruchs 1 und ein Verfahren nach dem Oberbegriff des Patentanspruchs 14.

Im Automobilbau werden zunehmend Leichtbauteile verwendet, welche hohe Steifigkeiten und hohe Festigkeiten bei geringem Gewicht aufweisen müssen. Häufig werden derartige Leichtbauteile als Außenhautteile eingesetzt, so dass deren Oberfläche einer Lackierung in vielen Fällen nach dem KTL-Prozess (kathodische Tauchlackeriung) unterzogen wird. Im KTL-Lackierprozess treten hohe Temperaturen (bis 200°C) über einen längeren Zeitraum (bis zu 60 min) auf, was zu keiner Beeinträchtigung der Eigenschaften des genannten Leichtbauteils führen darf. Andererseits muss ein derartiges Leichtbauteil auch die Anforderungen im Betrieb eines Fahrzeuges erfüllen. Es ist bekannt, dass Verbundbauteile mit außenliegenden Metallschichten und einer dazwischenliegenden, geschäumten Polymerschicht ein günstiges Gewicht/Steifigkeitsverhältnis aufweisen. Bisher ist allerdings kein derartiges Verbundbauteil bekannt, welches die Bedingungen beim KTL-Prozess ohne signifikante Einbußen in den mechanischen Eigenschaften übersteht.

Aufgabe der Erfindung ist es daher, ein Verbundbauteil mit geringem Gewicht, hoher mechanischer Steifigkeit vorzuschlagen, welches im KTL-Prozess lackierbar ist und den Anforderungen des Fahrzeugbaus genügt. Erfindungsgemäßes Verbundbauteil umfasst daher eine geschäumte, polymere Mittelschicht aus vorzugsweise hitzestabilisiertem Polyamid, insbesondere hitzestabilisiertem Polyamid 6 (PA6). Es hat sich gezeigt, dass eine Mischung aus Durethan B40FA (Hersteller: Lanxess) und Durethan TP904-004 (Hersteller: Lanxess) im Verhältnis 90:10 zu einem Material führt, welches die Bedingungen beim KTL-Prozess ohne merkliche Einbußen in den mechanischen Eigenschaften übersteht. Das Aufschäumen des Polymers wird vorzugsweise mittels sogenannter Mikrosphären realisiert, welche bei der Extrusion der geschäumten Polymerschicht dem Polyamid in Form von Masterbatch beigemischt wird. Die Herstellungsweise eines derartigen Masterbatches ist beispielsweise in WO 2009/046470 beschrieben. Die Temperatur der Polymerschmelze sowie der Druckabfall nach Austritt der Schmelze aus der Extruderdüse führen zu einer Expansion des in den Mikrosphären eingeschlossenen Gases und damit zu einem Aufschäumen des Polymers. Die Dicke der geschäumten, polymeren Mittelschicht liegt zwischen 10 µm und 5000 µm, bevorzugt zwischen 200 µm und 800 µm.

Wenn besondere Anforderungen an die Schlagzähigkeit des Verbundbauteils gelegt werden, ist erfindungsgemäß auch vorgesehen, das Polyamid mit Schlagzähmodifikatoren auszustatten. Geeignete Schlagzähmodifikatoren für Polyamid sind hinlänglich in der Literatur beschrieben (beispielsweise in: Technische Thermoplaste, 4. Polyamide; Hrsg: L. Bottenbruch und R. Binsack, Hanser Verlag 1998). Vorzugsweise können Acrylnitril-Butadien-Styrol oder Kautschuk zur Schlagzähmodifizierung verwendet werden. Weiters ist vorgesehen, dass Polymer durch Verstärkungsstoffe, wie Glasfasern, Glaskugeln, mineralische Füllstoffe, so zu modifizieren, dass die Eigenschaften des Verbundbauteils exakt auf die Anforderungen der Anwendung abgestimmt sind.

Vorteilhafterweise weist die geschäumte, polymere Mittelschicht zwei außenliegende Deckschichten auf, welche die geschäumte, polymere Mittelschicht zumindest teilweise bedecken, insbesondere vollständig. Zwischen der geschäumten, polymeren Mittelschicht und den Deckschichten kann für zusätzliche Funktionen eine Zwischensicht liegen. Diese Zwischenschicht kann ein oder mehrere Lagen aufweisen. Zum Beispiel kann die Zwischenschicht ein insbesondere temperaturabhängige Primerschicht und/oder eine Zwischenlage sein, die die Haftung verbessert, aber auch insbesondere das Crashverhalten verbessert oder je nach Decklage die Spannungen für Temperaturwechsel durch unterschiedliche Längenausdehnung zwischen der geschäumten, polymeren Mittelschicht und den Decklagen ausgleicht.

Weitere Vorteile und Merkmale der Erfindung gehen aus der nachfolgenden beispielhaften Beschreibung der Erfindung anhand mehrerer Ausführungsbeispiele hervor.

Es zeigen
Figur 1 eine Ausführungsform des erfindungsgemäßen Verbundbauteils,
Figur 2 eine zweite Ausführungsform des Verbundbauteils und
Figur 3 eine Vorrichtung zum Herstellen des Verbundbauteils.

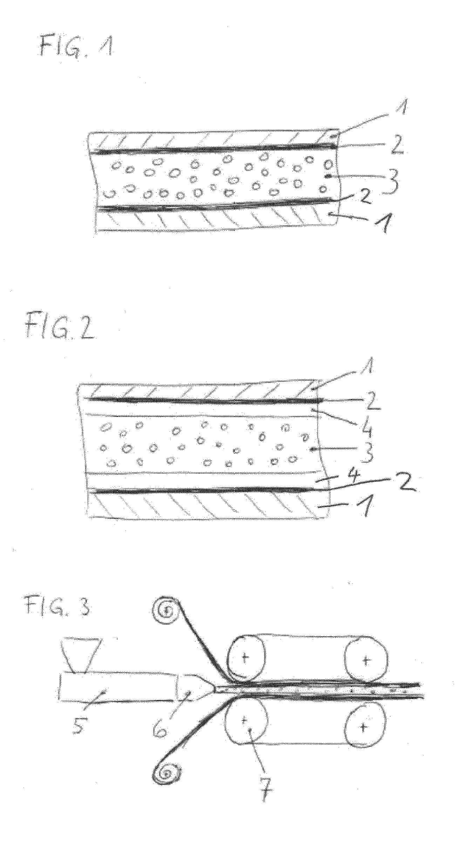

Reines Polyamid weist zu Metallblechen, insbesondere Aluminiumblechen, keine ausreichende Haftung auf. Aus diesem Grunde ist es notwendig, die Metallbleche 1 mit einer Primerschicht 2 zu versehen, welche einerseits eine gute Haftung zum Metallblech 1 und anderseits eine gute Haftung zur geschäumten, polymeren Mittelschicht 3 aufweist, wie in Figur 1 ersichtlich. Die genannte Primerschicht 2 wird üblicherweise durch Temperatur aktiviert, wobei dabei entweder das Metallblech 1 vorgewärmt werden kann oder die Wärme der Polymerschmelze beim Austritt aus der Extruderdüse für die Aktivierung des Primers genutzt werden kann. Nach Abkühlung des Verbundbauteils gehen die geschäumte, polymere Mittelschicht 3 und die Metallbleche 1 eine Verbindung ein, welche unter normalen Einsatzbedingungen des Verbundteils unlösbar ist. Die Primer können auf Basis von Polyester, Polyurethan (PU), Acrylat oder Epoxidharz sein.

In einer weiteren Ausprägung der Erfindung ist auch vorgesehen, die geschäumte, polymere Mittelschicht 3 mit weiteren Zwischenlagen 4 zu versehen, mit dem Zwecke einer besseren Haftung zum Aluminiumblech 1, wie in Figur 2 dargestellt. Diese Zwischenlagen 4, welche zwischen der geschäumten, polymeren Mittelschicht 3 und den äußeren Aluminiumblechen 1 liegen, können sich von der Mittelschicht 3 hinsichtlich der Schaumdichte unterscheiden. Erfahrungsgemäß sinken nämlich mit abnehmender Schaumdichte auch die zur Haftung beitragende Kontaktfläche und damit die Haftung zum Aluminiumblech 1. Weiters ist erfindungsgemäß vorgesehen, die Zwischenlagen 4 mit Haftvermittlern auszustatten, welche mit Polyamid kompatibel sind und eine gegenüber reinem Polyamid verbesserte Haftung zu den Metallblechen 1 eingehen. Dazu sind die dem Fachmann bekannten Maleinsäureanhydrid-gepfropften Polymere, Polymere auf Ethylen-Acrylsäure Basis oder Schmelzklebstoffe auf Basis von Copolyamiden (bspw. Platamid®, Hersteller: Arkema; Griltex®, Hersteller: Ems; Vestamelt®, Hersteller: Evonik) geeignet. Als Anbindungsschicht zwischen der Polyamidschaumschicht und den Decklagen ist erfindungsgemäß auch ein mit Polyamid imprägniertes Textil vorgesehen.

In einer weiteren Ausprägung der Erfindung ist auch vorgesehen, das Metallblech mit Vertiefungen (nano dimples) durch den sogenannten NMT-Prozess (Nano Molding Technology) zu versehen. Bei diesem Prozess wird das Metall durch je ein alkalisches und ein Säurebad geführt, um es zu reinigen. Anschließend durchläuft das Blech die sog. "T-Solution", ein von Mitsui entwickeltes Bad. Nach dem Reinigen mit Wasser sind nun nano dimpels an der Oberfläche des Bleches vorhanden, welche sich mit der Kunststoffschmelze zu einer unlösbaren Verbindung verbinden.

In einer bevorzugten Ausführungsform werden für erfindungsgemäßes Verbundbauteil Aluminumbleche als Deckschichten 1 verwendet. Metallbleche aus anderen Metallen oder Metalllegierungen sollen aber nicht ausgeschlossen werden. Die Dicke der Aluminiumbleche liegt zwischen 10 µm und 1000 µm, bevorzugt zwischen 200 µm und 500 µm. Die Aluminiumbleche sind an der Außenseite des Verbundbauteil entsprechend für eine nachträgliche Lackierung vorbereitet. Bevorzugt weisen die Aluminiumbleche in den Außenlagen 1 die gleiche Dicke auf, so dass man von einem symmetrischen Aufbau sprechen kann.

Weiters ist erfindungsgemäß vorgesehen, dass die Deckschichten 1 anstelle von Metall aus sogenannten Organoblechen bestehen. Organobleche sind Faser-Kunststoff-Verbundwerkstoffe bei denen Glas-, Carbon- oder andere anorganische oder organische Fasern in einer thermoplastischen Matrix eingebettet sind. Dadurch sind Organobleche oberhalb der Erweichungstemperatur des jeweiligen Thermoplasten in vergleichbarer Art wie Metallbleche verformbar. Weiters lassen sich an Organobleche in einfacher Weise weitere Versteifungselemente (bspw. Rippen) oder Befestigungselemente (bspw. Schraubdome) anspritzen. In einer weiteren Ausführungsform ist auch vorgesehen, dass das Organoblech durch ein Metalltextil (z.B. Gelege, Gewebe) verstärkt ist. Das hat den Vorteil, dass die Metallfäden gegenüber anderen Verstärkungsfasern ein anderes Steifigkeits- und Dämpfungs- und Crashverhalten aufweisen. Durch die Kombination eines Organobleches mit einem Metalltextil kann somit nicht nur die bevorzugte Belastungsrichtung für das Bauteil verstärkt werden sondern auch das Dämpfung- und Crashsverhalten sowie Längenausdehnung bzw thermisches Verhalten eingestellt werden. Weiters führt die Einbringung eines Metalltextils zu einer elektromagnetischen Schirmwirkung und elektrischen Leitfähigkeit des Gesamtbauteils, was bei Verwendung eines Organobleches auf Basis eines Thermoplast-Glasfaser-Verbundes nicht gegeben wäre. Somit sind in einer weiterführenden Entwicklung Bauteile mit Zusatzfunktionen wie Heizung usw. darstellbar.

Weiters ist erfindungsgemäß vorgesehen, dass eine Deckschicht 1 aus einem Textil mit aufgebrachtem Haftvermittler bzw. aufgebrachter Schlichte verwendet wird. Durch diese Ausführungsform lassen sich spezielle Designaspekte ("textile look") bewerkstelligen. Die Verwendung von Textilien aus Naturfasern bringt den Aspekt einer ökologischen Nachhaltigkeit für das Gesamtbauteil. Nicht zuletzt ist bekannt, dass Verbundbauteile mit Textilien ein gutes Dämpfungsverhalten haben. Erfindungsgemäß sind auch Kombinationen aus den oben angeführten Schichten als Deckschichten vorgesehen, also beispielsweise eine Kombination von einem Metallblech mit einem Organoblech oder eine Kombination eines Organobleches mit einem Metalltextil zu einer Deckschicht 1.

Erfindungsgemäßes Verbundbauteil kann sowohl einen symmetrischen Aufbau besitzen, aber auch einen unsymmetrischen Aufbau mit jeweils einer oben beschriebenen Deckschicht auf einer Seite, also beispielsweise einem Metallblech als eine obere Deckschicht 1 und ein Organoblech als eine untere Deckschicht.

Gemäß einem weiteren Aspekt der Erfindung, wie in Figur 3 visualisiert, wird der Schutz für ein Verfahren zur Herstellung einer beschriebenen Verbundplatte begehrt, wobei das Polyamid mit den Mikrosphären in einem Extruder 5 zur Mittelschicht extrudiert werden, nach dem Austritt der geschäumten Polymerschmelze aus der Extruderdüse 6 diese mit den Aluminiumblechen zusammengeführt wird, das dadurch entstandene Verbundbauteil in einer Doppelbandpresse 7 ausgekühlt und auf die gewünschte Dicke kalibriert wird. Das ausgekühlte Verbundbauteil kann anschließend zu Tafeln geschnitten oder zu Rollen gewickelt werden.

In einer weiteren Ausprägung des Verfahrens zur Herstellung der beschriebenen Verbundplatte ist vorgesehen, die geschäumte, polymere Mittelschicht 3 mit Zwischenlagen 4 zu coextrudieren. Das Material für die Zwischenlagen 4 zwischen der Mittelschicht 3 und den Metallblechen 1 werden in einem Coextruder in Form einer Kunststoffschmelze bereitgestellt und über einen Adapter mit nachgeschalteter Düse oder mittels einer Mehrkanaldüse gemeinsam mit der Mittelschicht ausgetragen.

Derartige Verbundbauteile sind besonders für Leichtbauanwendungen im Kraftfahrzeugbau, Flugzeugbau oder Schienenfahrzeugbau verwendbar.

## Patentansprüche

1. Verbundbauteil bestehend aus einer geschäumten, polymeren Mittelschicht und zwei außenliegenden Deckschichten (1), **dadurch gekennzeichnet, dass** Polymer Polyamid in der Mittelschicht (3) verwendet wird.

2. Verbundbauteil nach Anspruch 1, **dadurch gekennzeichnet, dass** sich zwischen der geschäumten, polymeren Mittelschicht (3) und den Deckschichten (1) jeweils eine Zwischenschicht befindet.

3. Verbundbauteil nach obigen Ansprüchen, **dadurch gekennzeichnet, dass** das Polyamid hitzestabilisiert ist.

4. Verbundbauteil nach obigen Ansprüchen, **dadurch gekennzeichnet, dass** zum Aufschäumen des Polyamids expandierbare Mikrosphären verwendet werden.

5. Verbundbauteil nach obigen Ansprüchen, **dadurch gekennzeichnet, dass** die Deckschichten (1) auf jener der Mittelschicht (3) zugewandten Seite mit einem Primer aus der Gruppe der Polyester, Polyurethane (PU), Acrylate oder Epoxidharze beschichtet ist.

6. Verbundbauteil nach obigen Ansprüchen, **dadurch gekennzeichnet, dass** die Dicke der Deckschichten (1) zwischen 10 µm und 1000 µm, bevorzugt zwischen 200 µm und 500 µm, liegt.

7. Verbundbauteil nach obigen Ansprüchen, **dadurch gekennzeichnet, dass** die Deckschichten (1) aus einem Metallblech, insbesondere einer Aluminiumlegidrung, einem Organoblech, einem durch ein Metalltextil verstärktes Organoblech, aus einem mit Haftvermittler versehenem Textil oder aus einer Kombination dieser Schichten bestehen.

8. Verbundbauteil nach obigen Ansprüchen, **dadurch gekennzeichnet, dass** die obere und die untere Deckschicht (1) nicht die gleiche Zusammensetzung aufweisen.

9. Verbundbauteil nach obigen Ansprüchen, **dadurch gekennzeichnet, dass** die Dicke der geschäumten, polymeren Mittelschicht (3) zwischen 10 µm und 5000 µm, bevorzugt zwischen 200 µm und 800 µm, liegt.

10. Verbundbauteil nach obigen Ansprüchen, **dadurch gekennzeichnet, dass** die Zwischenschichten aus der gleichen polymeren Basis wie die Mittelschicht (3) bestehen und eine höhere Dichte wie die Mittelschicht (3) aufweisen.

11. Verbundbauteil nach obigen Ansprüchen, **dadurch gekennzeichnet, dass** die Zwischenschichten einen Haftvermittler aufweist.

12. Verbundbauteil nach obigen Ansprüchen, **dadurch gekennzeichnet, dass** die Zwischenschichten aus einem Haftvermittler auf Basis von Maleinsäureanhydrid-gepfropften Polymeren, Polymeren auf Ethylen-Acrylsäure basierend oder aus Schmelzklebstoffen auf Basis von Copolyamiden bestehen.

13. Verbundbauteil nach obigen Ansprüchen, **dadurch gekennzeichnet, dass** die Zwischenschichten aus einem mit Polyamid imprägniertem Textil bestehen.

14. Verfahren zur Herstellung eines Verbundbauteils aufweisend eine geschäumte, polymere Mittelschicht (3) und Außenlagen aus Deckschichten (1), **dadurch gekennzeichnet, dass** die Polymerschmelze in einem Extruder (5) erzeugt wird, mit den Deckschichten (1) zusammengeführt wird und in einer Doppelbandpresse (7) abgekühlt und dickenkalibriert wird.

15. Verfahren zur Herstellung eines Verbundbauteils nach obigen Ansprüchen, **dadurch gekennzeichnet, dass** die Polymerschmelze in einem ersten Extruder, die Schmelze der Zwischenlagen in einem zweiten Extruder erzeugt und durch eine gemeinsame Düse in Form einer dreischichtigen Kunststoffschmelze ausgetragen werden, diese mit den Deckschichten (1) zusammengeführt wird und in einer Doppelbandpresse (7) abgekühlt und dickenkalibriert wird.
